(19) Europäisches Patentamt
European Patent Office
Office européen des brevets

(11) EP 4 674 639 A1

(12) **EUROPEAN PATENT APPLICATION**

(43) Date of publication:
**07.01.2026 Bulletin 2026/02**

(21) Application number: **25183179.8**

(22) Date of filing: **17.06.2025**

(51) International Patent Classification (IPC):
***B60C 1/00*** *(2006.01)* ***C08L 9/06*** *(2006.01)*

(52) Cooperative Patent Classification (CPC):
(C-Sets available)
**C08L 9/06; B60C 1/0016; B60C 11/005; B60C 11/033;** B60C 2011/0016; B60C 2011/0355
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.07.2024 JP 2024108886**

(71) Applicant: **Sumitomo Rubber Industries, Ltd.**
**Kobe-shi, Hyogo 651-0072 (JP)**

(72) Inventor: **MAEKAWA, Tetsuya**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **TIRE**

(57) Provided is a tire that excels in overall performance in terms of wet grip performance and abrasion resistance. The tire has a tread with a groove, the tread containing a crosslinked rubber in which a rubber component is crosslinked through boron-oxygen bonds, the tread having a boron content Bc (% by mass), a groove depth D (mm), and a land ratio L (%) that satisfy the following relationship (1):

$$(1)\ Bc/(D \times L) < 4.0 \times 10^{-4}.$$

EP 4 674 639 A1

(52) Cooperative Patent Classification (CPC): (Cont.)

C-Sets
**C08L 9/06, C08L 7/00, C08L 9/00, C08L 91/00, C08K 3/04, C08K 3/36, C08K 5/55, C08K 3/22, C08K 5/09, C08K 3/06, C08K 5/548, C08K 5/47, C08K 5/31**

## Description

TECHNICAL FIELD

The present invention relates to tires.

BACKGROUND ART

Various techniques to improve performances of tires have been studied. For example, improvement of usually contradictory properties, such as wet grip performance and abrasion resistance, is demanded (see Patent Literature 1).

CITATION LIST

PATENT LITERATURE

Patent Literature 1: JP 2015-147543 A

SUMMARY OF INVENTION

TECHNICAL PROBLEM

The present invention aims to solve the problem and provide a tire that excels in overall performance in terms of wet grip performance and abrasion resistance.

SOLUTION TO PROBLEM

The present invention relates to a tire having a tread with a groove,

the tread containing a crosslinked rubber in which a rubber component is crosslinked through boron-oxygen bonds, the tread having a boron content Bc (% by mass), a groove depth D (mm), and a land ratio L (%) that satisfy the following relationship (1):

$$(1)\ Bc/(D \times L) < 4.0 \times 10^{-4}.$$

ADVANTAGEOUS EFFECTS OF INVENTION

The tire of the present invention has a tread with a groove, the tread containing a crosslinked rubber in which a rubber component is crosslinked through boron-oxygen bonds, the tread having a boron content Bc (% by mass), a groove depth D (mm), and a land ratio L (%) that satisfy the relationship (1). This tire can exhibit improved overall performance in terms of wet grip performance and abrasion resistance.

BRIEF DESCRIPTION OF DRAWINGS

FIG. 1 is a cross-sectional view showing a part of a pneumatic tire.
FIG. 2 is an enlarged cross-sectional view showing a tread and its vicinity of the tire in FIG. 1.

DESCRIPTION OF EMBODIMENTS

The tire has a tread with a groove. The tread contains a crosslinked rubber in which a rubber component is crosslinked through boron-oxygen bonds. The tread has a boron content Bc (% by mass), a groove depth D (mm), and a land ratio L (%) that satisfy the relationship (1): $Bc/(D \times L) < 4.0 \times 10^{-4}$.

The reason for the above-described effects of the tire is not exactly clear, but it is believed as follows.

A crosslinked rubber produced by crosslinking a rubber component such as a diene-based rubber through boron-oxygen bonds (-B-O-), i.e., a rubber having a crosslinked structure of, for example, diene-based rubber-(R)-B-O-(R)-diene-based rubber, has an increased hysteresis loss due to repetition of dissociation (de-crosslinking) and

recombination of boron-oxygen bonds upon reaction with water.

Additionally, the reaction with water is facilitated by controlling the boron content Bc (% by mass) of the tread (100% by mass), the depth D (mm) of the groove formed in the tread, and the land ratio L (%) of the tread surface to satisfy the relationship (1): $Bc/(D \times L) < 4.0 \times 10^{-4}$ and also controlling the groove depth and the land ratio to be specific values or more relative to the boron content of the tread. At the same time, the influence of the dissociation (de-crosslinking) and recombination of boron-oxygen bonds on polymer chains can be dispersed throughout the tread, thereby imparting good abrasion resistance while improving wet grip performance.

Presumably, the tire thus can exhibit improved overall performance in terms of wet grip performance and abrasion resistance.

As discussed above, the tire solves the problem (aim) in improving overall performance in terms of wet grip performance and abrasion resistance due to the structure that satisfies the relationship (1): $Bc/(D \times L) < 4.0 \times 10^{-4}$. In other words, the parameter of the relationship (1): $Bc/(D \times L) < 4.0 \times 10^{-4}$ does not define the problem (aim). The problem herein is to improve overall performance in terms of wet grip performance and abrasion resistance. In order to solve the problem, the tire is formulated to have a structure that satisfies the parameter.

The tire has a tread.

The tread (tread portion) may be a monolayer tread consisting of the monolayer tread itself (first rubber layer), a two-layer tread consisting of a cap tread as the outermost layer (first rubber layer) and a base tread (second rubber layer) adjacent to the inner face of the cap tread in the tire radial direction, or a three or more-layer tread consisting of a cap tread as the outermost layer (first rubber layer), the second rubber layer that is adjacent to the inner face of the cap tread in the tire radial direction, and another rubber layer disposed on the inner side of the second rubber layer in the tire radial direction.

The tread contains a crosslinked rubber in which a rubber component is crosslinked through boron-oxygen bonds.

The rubber component contributes to crosslinking and generally corresponds to a polymer component which has a weight average molecular weight (Mw) of 10000 or more and which is not extractable with acetone. The rubber component is solid at room temperature (25°C).

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effects tend to be better achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component may be either an unmodified rubber or a modified rubber.

For example, the modified rubber may be a rubber having a functional group interactive with fillers such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of the rubber component include a diene-based rubber. Examples of the diene-based rubber include an isoprene-based rubber, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Examples of the rubber component also include butyl-based rubbers and fluororubbers. Each of these may be used alone, or two or more of these may be used in combination. Modified or hydrogenated products of these rubber components are also usable. Rubbers extended with oils, resins, liquid rubber components, or the like are usable as well. Of these, the rubber component preferably includes at least one of an isoprene-based rubber, BR, and SBR, more preferably includes an isoprene-based rubber and/or SBR, still more preferably includes an isoprene-based rubber, BR, and SBR.

The raw materials (monomers) of synthetic rubbers such as IR, SBR, and BR may be derived from underground resources such as petroleum or natural gas or may be recycled from rubber products such as tires or non-rubber products such as polystyrene. Non-limiting examples of monomers obtained by recycle (recycled monomers) include isoprene derived from recycled materials, butadiene derived from recycled materials, and aromatic vinyls derived from recycled materials. Examples of the butadiene include 1,2-butadiene and 1,3-butadiene. Non-limiting examples of the aromatic vinyls include styrene. Of these, isoprene derived from recycled materials (recycled isoprene), butadiene derived from recycled materials (recycled butadiene), and/or styrene derived from recycled materials (recycled styrene) are/is preferably used as a raw material.

The recycled monomers may be produced by any method. For example, a recycled monomer may be synthesized from naphtha derived from a recycled material that is obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

Further, the raw materials (monomers) of synthetic rubbers such as IR, SBR, and BR may be derived from biomass. Herein, the term "biomass" refers to substances derived from natural resources such as plants. Non-limiting examples of biomass include agricultural, forestry and marine products, sugar, wood chips, plant residues after collecting useful components, plant-derived ethanol, and biomass naphtha.

Non-limiting examples of biomass-derived monomers (biomass monomers) include biomass-derived butadiene and biomass-derived aromatic vinyls. Examples of the butadiene include 1,2-butadiene and 1,3-bitadiene. Non-limiting examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymers include styrene-butadiene rubber synthesized using biomass-derived butadiene and/or a biomass-derived styrene.

Whether the raw material of a polymer is derived from biomass can be judged by the percent Modern Carbon (pMC) measured in accordance with ASTM D6866-10.

The term "pMC" refers to the ratio of the $^{14}C$ content of a sample to the $^{14}C$ content of a modern carbon standard (modern standard reference). This value is used as an index indicative of the biomass ratio of a compound. The following will describe what this value means.

One mole of carbon atoms ($6.02 \times 10^{23}$ carbon atoms) includes about $6.02 \times 10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226000 years. This means that in the fossil fuels, such as coal, petroleum, and natural gas, which are considered to be left for at least 226000 years after carbon dioxide and the like in the air were taken into and fixed in plants, or the like, all the $^{14}C$ atoms which had been contained in the plants or the like at the beginning of the fixation were decayed. Therefore, in the current 21st century, the fossil fuels, such as coal, petroleum, and natural gas, contain no $^{14}C$ atoms. Thus, chemical materials prepared from such fossil fuel raw materials contain no $^{14}C$ atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant. Then, the $^{14}C$ content of materials derived from biomass resources which are circulating in the current environment is about $1 \times 10^{-12}$ mol% of the total of C atoms as described above. Therefore, a difference in the values can be used to calculate the biomass ratio of a compound.

The amount of $^{14}C$ is generally determined as follows. $^{13}C$ content ($^{13}C/^{12}C$) and $^{14}C$ content ($^{14}C/^{12}C$) are determined by tandem accelerator-based mass spectrometry. In the determination, the $^{14}C$ content of the natural carbon cycle at 1950 is used as a modern standard reference, that is, a standard $^{14}C$ content. The particular standard substance used is an oxalic acid standard offered by the National Institute of Standards and Technology (NIST), United States. The specific radioactivity of carbon (intensity of radioactivity of $^{14}C$ per gram of carbon) in the oxalic acid is corrected for carbon isotopic fractionation to a certain value for $^{13}C$, and is then corrected for decay between 1950 AD and the measurement date. This corrected value is taken as the standard $^{14}C$ content (100%). The ratio between this value and the actual measurement value of a sample is defined as pMC.

Thus, a rubber 100% produced from materials derived from biomass is expected to have roughly about 110 pMC because, although there are some differences such as regional differences, currently such a material often fails to exhibit a value of 100 in usual conditions. On the other hand, the measured $^{14}C$ content of chemical substances derived from fossil

fuels, such as petroleum, is expected to be about 0 pMC (for example, 0.3 pMC). This value corresponds to a biomass ratio of 0% mentioned above.

Based on the above discussion, materials such as rubber with a high pMC i.e., materials such as rubber with a high biomass ratio can suitably be used in rubber compositions for environmental protection.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination. To better achieve the advantageous effects, natural rubbers (NR) or polyisoprene rubbers (IR) are preferred, and natural rubbers are more preferred.

Any BR may be used, and examples include high-cis BR having a high cis content, BR containing syndiotactic polybutadiene crystals, and BR synthesized using rare earth catalysts (rare earth-catalyzed BR). Each of these may be used alone, or two or more of these may be used in combination. In particular, BR preferably includes high-cis BR having a cis content of 90% by mass or higher. The cis content is more preferably 95% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of BR can be calculated using the expression: {$\Sigma$(amount of each BR $\times$ cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= $(20 \times 90 + 10 \times 40)/(20 + 10)$).

The BR may be either an unmodified BR or a modified BR. Examples of the modified BR include those into which the functional groups listed for the modified rubbers have been introduced. The BR may also be a hydrogenated polybutadiene polymer (hydrogenated BR).

Examples of usable BR include BR products available from UBE Corporation, JSR Corporation, Asahi Kasei Corp., Zeon Corporation, and other manufacturers.

Non-limiting examples of SBR include emulsion-polymerized styrene-butadiene rubbers (E-SBR) and solution-polymerized styrene-butadiene rubbers (S-SBR). Each of these may be used alone, or two or more of these may be used in combination.

When SBR is used, the advantageous effects tend to be better achieved.

The mechanism of the enhancement of the advantageous effects provided by the use of SBR is not clear. Presumably, the movement of styrene in the SBR tends to increase hysteresis loss, so that wet grip performance in particular is improved. Thus, presumably, overall performance in terms of wet grip performance and abrasion resistance is significantly improved.

The styrene content of the SBR is preferably 3% by mass or higher, more preferably 5% by mass or higher, still more preferably 10% by mass or higher. The styrene content is preferably 40% by mass or lower, more preferably 25% by mass or lower, still more preferably 24% by mass or lower, further preferably 20% by mass or lower. When the styrene content is within the range indicated above, the advantageous effects tend to be better achieved.

Herein, the styrene content can be determined by pyrolysis gas chromatography or NMR analysis ($^1$H-NMR or $^{13}$C-NMR). Unlike physical properties such as complex modulus of elasticity (E*), the amounts of components such as "styrene content" have true values that do not depend on the measurement method and therefore they are preferably measured by methods with the highest possible accuracy. Herein, the term "pyrolysis gas chromatography" refers to a method including heating a sample with a pyrolysis reactor, isolating each component included in gas phase components generated by the heating with a separation column, and analyzing the isolated component.

In EXAMPLES described below, the styrene content is measured by $^{13}$C-NMR analysis.

When one type of SBR is used, the styrene content of the SBR refers to the styrene content of the one SBR, while when multiple types of SBR are used, it refers to the average styrene content.

The average styrene content of SBR can be calculated using the expression: {$\Sigma$(amount of each SBR $\times$ styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= $(85 \times 40 + 5 \times 25)/(85 + 5)$).

The vinyl bond content of the SBR is preferably 3% by mass or higher, more preferably 5% by mass or higher, still more preferably 7% by mass or higher. The vinyl bond content is preferably 40% by mass or lower, more preferably 20% by mass or lower, still more preferably 17% by mass or lower, further preferably 15% by mass or lower. When the vinyl bond content is within the range indicated above, the advantageous effects tend to be better achieved.

Herein, the vinyl bond content (1,2-butadiene unit content) can be measured by infrared absorption spectrometry.

The vinyl bond content (1,2-butadiene unit content) of the SBR refers to the percentage (unit: % by mass) of vinyl bonds based on the total mass of the butadiene moieties in the SBR taken as 100. The sum of the vinyl bond content (% by mass), the cis content (% by mass), and the trans content (% by mass) equals 100 (% by mass). When one type of SBR is used, the vinyl bond content of the SBR refers to the vinyl bond content of the one SBR, while when multiple types of SBR are used, it refers to the average vinyl bond content.

The average vinyl bond content of SBR can be calculated using the expression: Σ{amount of each SBR × (100 (% by mass) - styrene content (% by mass) of the each SBR) × vinyl bond content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl bond content of 30% by mass, 15 parts by mass of SBR having a styrene content of 25% by mass and a vinyl bond content of 20% by mass, and the remaining 10 parts by mass of a rubber component other than SBR, the average vinyl bond content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either an unmodified SBR or a modified SBR. Examples of the modified SBR include those into which the functional groups listed for the modified rubbers have been introduced. The SBR may also be a hydrogenated styrene-butadiene copolymer (hydrogenated SBR).

The SBR may be a SBR product manufactured or sold by Sumitomo Chemical Co., Ltd., JSR Corporation, Asahi Kasei Corporation, Zeon Corporation, or other manufacturers or may be SBR synthesized by a known method.

The tread contains a crosslinked rubber in which the rubber component is crosslinked through boron-oxygen bonds (-B-O-). The crosslinked rubber may be any crosslinked rubber in which a rubber component is crosslinked through boron-oxygen bonds (-B-O-). Each boron-oxygen bond (-B-O-) may be directly bound to a rubber component such as a diene-based rubber (schematically, for example, rubber component(-B-O-)rubber component) or may be bound to a rubber component such as a diene-based rubber via one or more of other atoms (schematically, for example, rubber component-one or more other atoms(-B-O-)one or more other atoms-rubber component).

To better achieve the advantageous effects and to facilitate controlling of crosslinking and de-crosslinking with water or alcohol, the crosslinked rubber in which a rubber component is crosslinked through boron-oxygen bonds preferably includes a structural unit represented by the following formula (A1) at a crosslinking portion of the crosslinked rubber. In this case, the structural unit represented by the formula (A1) functions as a polymer crosslinking portion.

[Chem. 1]

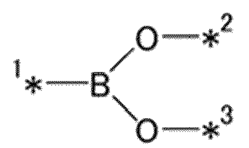

(A1)

In the formula, $*^1$ represents a portion bound to a boron atom, and $*^2$ and $*^3$ each represent a portion bound to an oxygen atom.

The crosslinking portion including the structural unit represented by the formula (A1) in the crosslinked rubber may be expressed as follows:

[Chem. 2]

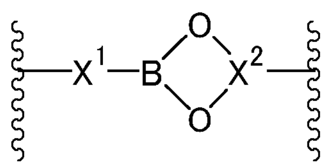

Polymer chain Polymer chain

wherein $X^1$ represents a divalent linking group, and $X^2$ represents a trivalent linking group.

Examples of the divalent linking group as $X^1$ include a divalent hydrocarbon group (such as an alkylene group, preferably a C1-C12 alkylene group, or an arylene group, preferably a C6-C20 arylene group), -NH-, -SO-, $-SO_2-$, - CO-, -O-, -COO-, -OCO-, -S-, -NHCO-, -CONH-, and a group including a combination of two or more of these. In $X^1$, the hydrocarbon group may be substituted. Examples of the substituent include a hydroxy group.

Examples of the trivalent linking group as $X^2$ include a trivalent hydrocarbon group and a group including a combination of two or more selected from a hydrocarbon group, -O-, -CO-, -COO-, -OCO-, -NH-, and -S-. Examples of the hydrocarbon group include an aliphatic hydrocarbon group and an aromatic hydrocarbon group. The number of carbon atoms of the aliphatic hydrocarbon group is preferably 1 to 30, more preferably 1 to 20, still more preferably 1 to 15. The aliphatic hydrocarbon group may be linear, branched, or cyclic. The number of carbon atoms of the aromatic hydrocarbon group is preferably 6 to 30, more preferably 6 to 20, still more preferably 6 to 10. The hydrocarbon group as $X^2$ may be substituted. Examples of the substituent include a hydroxy group.

The crosslink through boron-oxygen bonds is different from a crosslink through sulfur bonds as in a usual vulcanized rubber and can be easily de-crosslinked by prescribed methods. Moreover, the de-crosslinked structure can be further crosslinked again.

For example, in the case of a crosslinked rubber with the crosslinking portion including a structural unit represented by the formula (A1), a diboronic acid ester can be dissociated in the presence of water or alcohol, so that the crosslinking portion can be dissociated (de-crosslinked) into a structure represented by the following formula (A2) and a structure represented by the following formula (A3):

[Chem. 3]

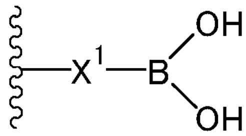

(A2)

Polymer chain

wherein $X^1$ represents a divalent linking group,

[Chem. 4]

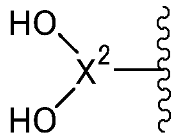

(A3)

Polymer chain

wherein $X^2$ represents a trivalent linking group.

In the formula (A2), examples of $X^1$ include the divalent linking groups described for the above $X^1$.

In the formula (A3), examples of $X^2$ include the trivalent linking groups described for the above $X^2$.

In the case of a crosslinked rubber with the crosslinking portion including a structural unit represented by the formula (A1), a diboronic acid ester can be dissociated in the presence of water or alcohol, so that the crosslinking portion can be dissociated (de-crosslinked) into a structure represented by the following formula (A4) and a structure represented by the following formula (A5). Herein, the embodiments of dissociation shown in the following [Chem. 5] and [Chem. 6] are also referred to as de-crosslinking.

[Chem. 5]

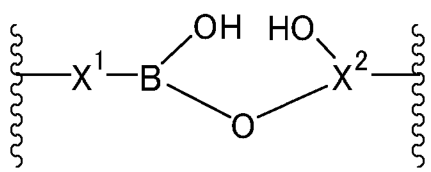

(A4)

Polymer chain Polymer chain

In the formula, $X^1$ represents a divalent linking group, and $X^2$ represents a trivalent linking group.

[Chem. 6]

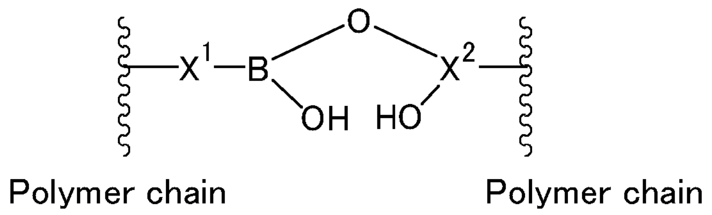

(A5)

In the formula, $X^1$ represents a divalent linking group, and $X^2$ represents a trivalent linking group.

In the formula (A4), examples of $X^1$ include the divalent linking groups described for the above $X^1$, and examples of $X^2$ include the trivalent linking groups described for the above $X^2$.

In the formula (A5), examples of $X^1$ include the divalent linking groups described for the above $X^1$, and examples of $X^2$ include the trivalent linking groups described for the above $X^2$.

Examples of the alcohol usable in the de-crosslinking include known alcohol compounds such as linear, branched, or cyclic alkyl or alkoxy alcohols, aromatic alcohols, and fluoroalcohols. The alkyl alcohol preferably has 1 to 25 carbon atoms. The alkoxy alcohol preferably has 1 to 10 carbon atoms. The aromatic alcohol preferably has 6 to 10 carbon atoms. The fluoroalcohol preferably has 1 to 6 carbon atoms. Preferred among these are linear, branched, or cyclic alkyl alcohols, and more preferred are linear alkyl alcohols.

Examples of the alkyl alcohols include methanol, ethanol, propanol, butanol, pentanol, hexanol, heptanol, octanol, nonanol, decanol, dodecanol, hexadecanol, octadecanol, eicosanol, and docosanol. Examples of the alkoxy alcohols include methoxyethanol and ethoxyethanol. Examples of the aromatic alcohols include benzyl alcohol and 2-benzyloxyethanol. Examples of the fluoroalcohols include perfluoroalcohols such as perfluoroethanol; 2-fluoroethanol; and 2,2,2-trifluoroethanol. Alkyl alcohols are preferred among these. Each of these may be used alone, or two or more of these may be used in combination.

The crosslinked rubber in which the rubber component is crosslinked through boron-oxygen bonds (-B-O-) as expressed in the [Chem. 2] in the tread can be obtained using, for example, a tread rubber composition that contains the rubber component and a boron-oxygen-containing compound having boron-oxygen bonds (-B-O-).

It suffices that at least one layer of the first rubber layer, the second rubber layer, and another rubber layer in the tread is obtained using the tread rubber composition described below. The layer obtained using the tread rubber composition is desirably the tread itself (first rubber layer) in the monolayer tread, the cap tread (first rubber layer) in the two-layer tread, or the cap tread (first rubber layer) and the second rubber layer that is adjacent to the inner face of the cap tread in the tire radial direction in the three or more-layer tread.

The below-described chemicals in the tread rubber composition may be usable in any rubber composition that forms the tread. In particular, the chemicals may suitably be used in a cap tread rubber composition or a rubber composition for the second rubber layer that is adjacent to the inner face of the cap tread in the tire radial direction.

Chemicals usable in the tread rubber composition are described below.

Any of the above-described rubber components is usable as the rubber component in the tread rubber composition.

The amount of the isoprene-based rubber, if present, in the tread rubber composition based on 100% by mass of the rubber component is preferably 5% by mass or more, more preferably 10% by mass or more, still more preferably 15% by mass or more, while it is preferably 50% by mass or less, more preferably 40% by mass or less, still more preferably 30% by mass or less. When the amount is within the range indicated above, the advantageous effects tend to be better achieved.

The amount within the range is also desirable in the cap tread rubber composition and the rubber composition for the second rubber layer.

The amount of the BR, if present, in the tread rubber composition based on 100% by mass of the rubber component is preferably 5% by mass or more, more preferably 10% by mass or more, still more preferably 15% by mass or more, while it is preferably 40% by mass or less, more preferably 30% by mass or less, still more preferably 20% by mass or less. When the amount is within the range indicated above, the advantageous effects tend to be better achieved.

The amount within the range is also desirable in the cap tread rubber composition and the rubber composition for the second rubber layer.

The amount of the SBR, if present, in the tread rubber composition based on 100% by mass of the rubber component is preferably 10% by mass or more, more preferably 30% by mass or more, still more preferably 50% by mass or more, while it is preferably 80% by mass or less, more preferably 70% by mass or less, still more preferably 60% by mass or less. When the amount is within the range indicated above, the advantageous effects tend to be better achieved.

The amount within the range is also desirable in the cap tread rubber composition and the rubber composition for

the second rubber layer.

The boron-oxygen-containing compound in the tread rubber composition may be any compound having boron-oxygen bonds (-B-O-). In particular, a compound represented by the following formula (a1) is desirably used.

[Chem. 7]

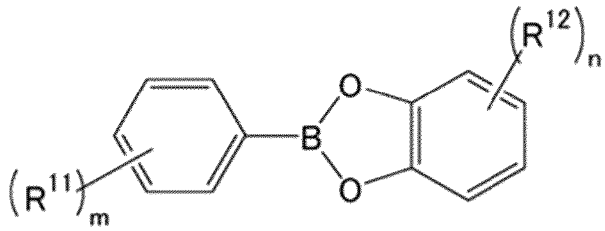

(a1)

In the formula, $R^{11}$s are the same as or different from each other and each represent an optionally substituted monovalent hydrocarbon group which may have a hetero atom, and m represents an integer of 1 to 5.

$R^{12}$s are the same as or different from each other and each represent an optionally substituted monovalent hydrocarbon group which may have a hetero atom, and n represents an integer of 1 to 4.

Examples of the monovalent hydrocarbon group constituting the skeleton of $R^{11}$ or $R^{12}$ in the formula (a1) include a linear, cyclic, or branched alkyl, alkenyl, aryl, or aralkyl group. Preferred among these is an alkyl group. The number of carbon atoms of $R^{11}$ or $R^{12}$ is preferably 1 or more, while it is preferably 10 or less, more preferably 4 or less, still more preferably 3 or less. Specific examples include a methyl group, an ethyl group, an n-propyl group, an isopropyl group, an n-butyl group, an isobutyl group, a sec-butyl group, a tert-butyl group, a pentyl group, a hexyl group, a heptyl group, a 2-ethylhexyl group, an octyl group, a nonyl group, and a decyl group.

In the formula (a1), the substituent in $R^{11}$ or $R^{12}$ may be added to or introduced into the skeleton of the monovalent hydrocarbon group constituting the skeleton of $R^{11}$ or $R^{12}$. Non-limiting examples of the substituent include known groups, including C1-C4 alkoxy groups such as a methoxy group, an ethoxy group, and a butoxy group; halogen atoms such as a chlorine atom, a bromine atom, an iodine atom, and a fluorine atom; C6-C12 aryl groups such as a phenyl group, a naphthyl group, and a biphenyl group; and polar groups such as an oxo group (=O), a hydroxy group, a carboxyl group, a carbonyl group, an amino group, an acetyl group, an amide group, an imide group, and a thiol group. Of these, the substituent is preferably a carboxyl group, an amino group, or a thiol group and is more preferably a thiol group (-SH) to better achieve the advantageous effects.

Examples of the hetero atom in $R^{11}$ or $R^{12}$ include a nitrogen atom, an oxygen atom, and a sulfur atom. Of these, a sulfur atom is preferred to better achieve the advantageous effects.

To better achieve the advantageous effects, m in the formula (a1) is preferably 1 to 4, more preferably 1 to 3, still more preferably 1 or 2, particularly preferably 1.

To better achieve the advantageous effects, n in the formula (a1) is preferably 1 to 3, more preferably 1 or 2, still more preferably 1.

To better achieve the advantageous effects, the boron-oxygen-containing compound represented by the formula (a1) is especially suitably a compound represented by the following formula (a1-1).

[Chem. 8]

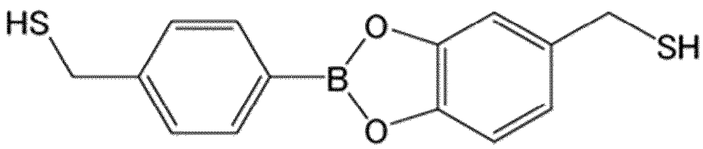

(a1-1)

The boron-oxygen-containing compound represented by the formula (a1) can be synthesized in accordance with a known method. For example, the boron-oxygen-containing compound represented by the formula (a1) can be synthesized by a condensation reaction of a compound represented by the following formula (a2) and a compound represented by the following formula (a3).

[Chem. 9]

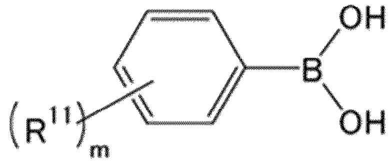

(a2)

[Chem. 10]

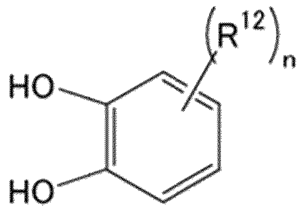

(a3)

In the formulas (a2) and (a3), $R^{11}$, $R^{12}$, m, and n are as described above.

When the boron-oxygen-containing compound represented by the formula (a1) is subjected to a hydrolysis reaction, a reverse reaction of the above-described reaction proceeds, so that the compound represented by the formula (a2) and the compound represented by the formula (a3) are synthesized.

The amount of the boron-oxygen-containing compound in the tread rubber composition per 100 parts by mass of the rubber component is preferably 1 part by mass or more, more preferably 5 parts by mass or more, still more preferably 8 parts by mass or more, particularly preferably 10 parts by mass or more, while it is preferably 30 parts by mass or less, more preferably 20 parts by mass or less, still more preferably 17 parts by mass or less. When the amount is within the range indicated above, the advantageous effects tend to be better achieved.

Desirably, the amount of the boron-oxygen-containing compound represented by the formula (a1) and the amount of the boron-oxygen-containing compound represented by the formula (a1-1) are also each within the range indicated above.

The range within the range is also desirable in the cap tread rubber composition and the rubber composition for the second rubber layer.

For example, the crosslinking portion of the crosslinked rubber that can be obtained using the tread rubber composition containing the rubber component and the compound represented by the formula (a1) may schematically be expressed as follows.

[Chem. 11]

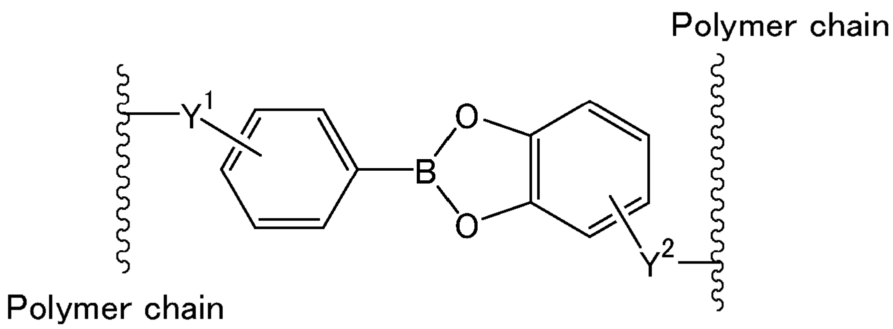


In the above, $Y^1$ and $Y^2$ each independently represent a divalent linking group.

The divalent linking group as $Y^1$ or $Y^2$ may independently be a single bond, a group derived from the $R^{11}$, or a group derived from the $R^{12}$, for example.

In the crosslinked rubber that can be obtained using the tread rubber composition containing the rubber component and the compound represented by the formula (a1), the crosslinking portion schematically expressed as above can be de-crosslinked in the presence of water or alcohol into, for example, a structure represented by the following formula (A6) and a structure represented by the following formula (A7).

[Chem. 12]

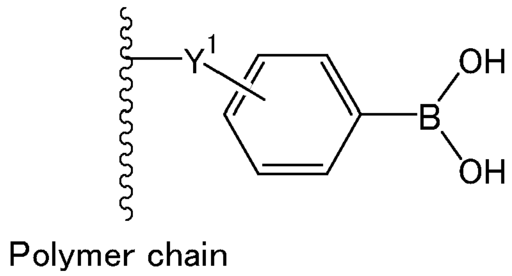

(A6)

[Chem. 13]

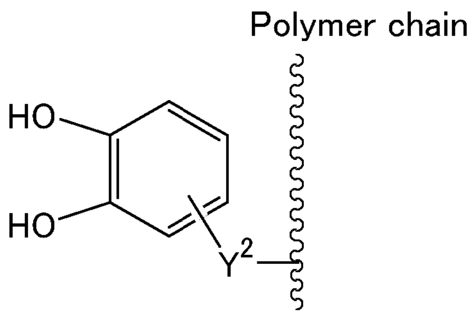

(A7)

The crosslinking portion of the crosslinked rubber that can be obtained using the tread rubber composition containing the rubber component and the compound represented by the formula (a1-1) can schematically be expressed as follows, for example. Specifically, in the crosslinking portion, a thiol group (-SH) in the compound represented by the formula (a1-1) binds to a polymer chain and forms a crosslink expressed as "-S-polymer".

[Chem. 14]

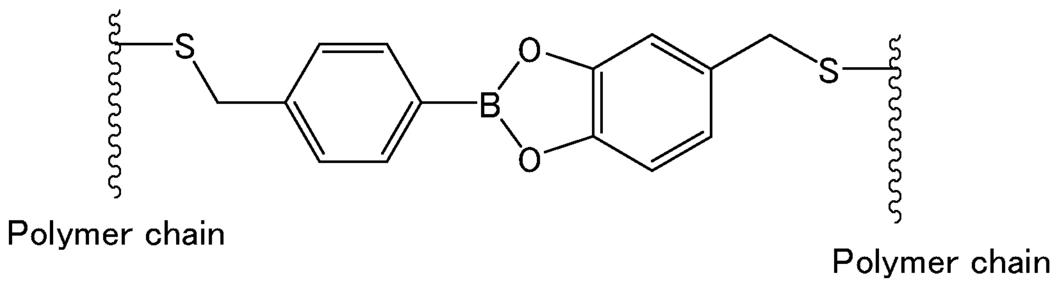

Further, in the crosslinked rubber that can be obtained using the tread rubber composition containing the rubber component and the compound represented by the formula (a1-1), the crosslinking portion which may schematically be expressed as above can be de-crosslinked in the presence of water or alcohol into a structure represented by the following formula (A8) and a structure represented by the following formula (A9).

[Chem. 15]

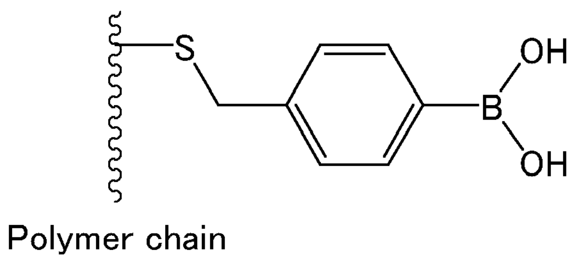

(A8)

[Chem. 16]

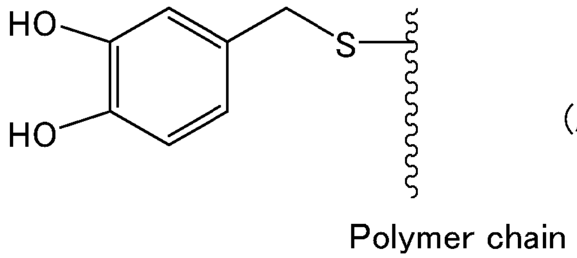

(A9)

The tread rubber composition desirably contains a filler.

Any filler may be used, including materials known in the rubber field. Examples include inorganic fillers such as carbon black, silica, calcium carbonate, talc, alumina, clay, aluminum hydroxide, aluminum oxide, and mica; bio char; and hard-to-disperse fillers. To better achieve the advantageous effects, carbon black or silica is preferred, and silica is more preferred among these.

The mechanism of the enhancement of the advantageous effects provided by containing silica is not clear. Presumably, the presence of silica improves the followability to a wet road surface, in particular, provides an effect of improving wet grip performance. Thus, presumably, overall performance in terms of wet grip performance and abrasion resistance is significantly improved.

The amount of the filler (total amount of fillers such as carbon black and silica) per 100 parts by mass of the rubber component in the tread rubber composition is preferably 30 parts by mass or more, more preferably 60 parts by mass or more, still more preferably 85 parts by mass or more, while it is preferably 150 parts by mass or less, more preferably 120 parts by mass or less, still more preferably 100 parts by mass or less. When the amount is within the range indicated above, the advantageous effects tend to be better achieved.

The amount within the range is also desirable in the cap tread rubber composition and the rubber composition for the second rubber layer.

Non-limiting examples of usable carbon black include N134, N110, N220, N234, N219, N339, N330, N326, N351, N550, and N762. The raw material of the carbon black may be a biomass material such as lignin or a plant oil or may be a pyrolysis oil obtained by pyrolyzing waste tires. The carbon black may be produced through combustion, for example, by the furnace method, through hydrothermal carbonization (HTC), or through thermal decomposition of methane, for example, by the thermal black method. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, and other manufacturers. Each of these carbon black may be used alone, or two or more of these may be used in combination.

The nitrogen adsorption specific surface area ($N_2SA$) of the carbon black is preferably 5 $m^2/g$ or more, more preferably 50 $m^2/g$ or more, still more preferably 90 $m^2/g$ or more. The $N_2SA$ is preferably 200 $m^2/g$ or less, more preferably 130 $m^2/g$ or less, still more preferably 120 $m^2/g$ or less. When the $N_2SA$ is within the range indicated above, the advantageous effects tend to be better achieved.

Herein, the nitrogen adsorption specific surface area of carbon black may be determined in accordance with JIS K 6217-2:2001.

The amount of the carbon black per 100 parts by mass of the rubber component in the tread rubber composition is preferably 2 parts by mass or more, more preferably 10 parts by mass or more, still more preferably 15 parts by mass or more, while it is preferably 50 parts by mass or less, more preferably 30 parts by mass or less, still more preferably 25 parts by mass or less. When the amount is within the range indicated above, the advantageous effects tend to be better achieved.

The amount within the range is also desirable in the cap tread rubber composition and the rubber composition for the second rubber layer.

Non-limiting examples of silica usable in the tread rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks as a raw material). The silica may be silica recycled from a silica-containing product. Preferred among these are hydrous silica prepared by a wet process because it has a large number of silanol groups. The silica may be used alone or two or more types of the silica may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide

to filtration, water washing, drying, and grinding.

The silica recycled from a silica-containing product may be silica recovered from a silica-containing product including an electronic component such as a semiconductor, a tire, a drying agent, or a filtering material such as diatomite. Non-limiting examples of the recovering method include thermal decomposition and decomposition by electromagnetic waves. Preferred among these is silica recovered from an electronic component such as a semiconductor or a tire.

Since crystalline silica does not dissolve in water, silicic acid as a component thereof cannot be utilized. Crystallization of silica in husk ash can be suppressed by controlling the burning temperature and burning time (see JP 2009-2594 A, Akita Prefectural University Web Journal B/2019, vol.6, pp.216-222, for example).

Amorphous silica extracted from husks may be commercially available from Wilmar and other manufacturers.

The amount of the silica per 100 parts by mass of the rubber component in the tread rubber composition is preferably 20 parts by mass or more, more preferably 50 parts by mass or more, still more preferably 60 parts by mass or more, particularly preferably 70 parts by mass or more, while it is preferably 150 parts by mass or less, more preferably 120 parts by mass or less, still more preferably 100 parts by mass or less. When the amount is within the range indicated above, the advantageous effects tend to be better achieved.

The amount within the range is also desirable in the cap tread rubber composition and the rubber composition for the second rubber layer.

The mechanism of the enhancement of the advantageous effects provided by containing 60 parts by mass or more of silica is not clear. Presumably, the presence of such a large amount of silica improves the followability to a wet road surface, in particular, provides an effect of improving wet grip performance. Thus, presumably, overall performance in terms of wet grip performance and abrasion resistance is significantly improved.

The nitrogen adsorption specific surface area ($N_2SA$) of the silica is preferably 50 $m^2/g$ or more, more preferably 100 $m^2/g$ or more, still more preferably 150 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effects tend to be better achieved.

The $N_2SA$ of silica is measured by a BET method in accordance with ASTM D3037-93.

The average particle size of the silica is preferably less than 25 nm, more preferably less than 22 nm, still more preferably less than 20 nm, while it is preferably more than 6 nm, more preferably more than 9 nm, still more preferably more than 10 nm. When the average particle size is within the range indicated above, the advantageous effects tend to be better achieved.

Here, the average particle size of the silica refers to the average particle size of all types of silica (all silica including usual silica and biomass-derived silica) in the rubber composition.

Herein, the average particle size of the silica is determined by transmission electron microscopy (TEM). Specifically, silica particles are photographed using a transmission electron microscope. When a particle has a spherical shape, the particle size is the spherical diameter. When a particle has an acicular or rod shape, the particle size is the minor axis length. When a particle has an amorphous shape, the particle size is an average of the particle diameters passing the center. An average of the particle sizes of 100 fine particles is calculated and defined as the average particle size.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, the term "cellulose microfibrils" typically refers to cellulose fibers having an average fiber diameter of not more than 10 $\mu$m, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter indicated above.

The amount of hard-to-disperse fillers, if present, in the tread rubber composition per 100 parts by mass of the rubber component is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effects tend to be better achieved.

The amount within the range is also desirable in the cap tread rubber composition and the rubber composition for the second rubber layer.

The tread rubber composition which contains silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., and other manufacturers. Each of these may be used alone, or two or more of these may be used in combination.

The amount of silane coupling agents per 100 parts by mass of silica in the tread rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effects tend to be better achieved.

The amount within the range is also desirable in the cap tread rubber composition and the rubber composition for the second rubber layer.

The tread rubber composition may contain a plasticizer.

Herein, the term "plasticizer" refers to a material that imparts plasticity to rubber components and conceptually includes both plasticizers that are liquid at room temperature (25°C) and plasticizers that are solid at room temperature (25°C). Examples of the plasticizer include resin components, oils, liquid polymers, and ester plasticizers. These plasticizers may be derived from petroleum, biomass, or naphtha recycled from rubber products or non-rubber products. Usable plasticizers also include low molecular weight hydrocarbon components obtained by subjecting used tires or products containing various components to pyrolysis and extraction. Each of these plasticizers may be used alone, or two or more of these may be used in combination.

Examples of the plasticizer include oils, liquid polymers, and resins. Each of these may be used alone, or two or more of these may be used in combination.

Examples of the oils include process oils, plant oils, and animal oils. Examples of the process oils include paraffinic process oils (mineral oils), naphthenic process oils, and aromatic process oils. Specific examples of the process oils include mild extract solvates (MES), distillate aromatic extracts (DAE), treated distillate aromatic extracts (TDAE), treated residual aromatic extracts (TRAE), and residual aromatic extracts (RAE). For environmental protection, process oils with a low polycyclic aromatic compound (PCA) content may be used. Examples of the process oils with a low PCA content include MES, TDAE, and heavy naphthenic oils. In view of life cycle assessment, oils obtained by purifying waste oils used in rubber mixing machines or engines or waste cooking oils used in cooking establishments may be used.

Herein, examples of the plant oils include linseed oil, rapeseed oil, safflower oil, soybean oil, corn oil, cotton seed oil, rice oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grape seed oil, and Japan tallow. Examples of the plant oils also include refined oils (e.g., salad oil) produced by refining the above-mentioned oils, esterified oils produced by esterifying the above-mentioned oils, hardened oils produced by hydrogenation of the above-mentioned oils, thermally polymerized oils produced by thermal polymerization of the above-mentioned oils, oxidized polymerized oils produced by oxidizing the above-mentioned oils, and waste edible oils recovered from used edible oils or the like. The plant oils may be liquid or solid at room temperature (25°C). Each of these plant oils may be used alone, or two or more of these may be used in combination.

The plant oils according to the present embodiments each preferably contain acylglycerol and more preferably contain triacylglycerol. Herein, the term "acylglycerol" refers to a compound in which hydroxy groups of glycerol are ester-bonded to a fatty acid. Non-limiting examples of the acylglycerol include 1-monoacylglycerol, 2-monoacylglycerol, 1,2-diacylglycerol, 1,3-diacylglycerol, and triacylglycerol. Moreover, the acylglycerol may be a monomer, a dimer, or a trimer or higher multimer. A dimer or higher multimer acylglycerol may be obtained by thermal polymerization or oxidation polymerization, for example. The acylglycerol may be liquid or solid at room temperature (25°C) .

Whether a rubber composition contains the acylglycerol may be examined by any method such as $^1$H-NMR analysis. For example, a rubber composition containing triacylglycerol is immersed in deuterium chloroform at room temperature (25°C) for 24 hours. After removing the rubber composition, the $^1$H-NMR is measured at room temperature. Signals observed at around 5.26 ppm, around 4.28 ppm, and around 4.15 ppm, each relative to the signal of tetramethylsilane (TMS) taken as 0.00 ppm, are assumed as the signals of hydrogen atoms bound to carbon atoms adjacent to the oxygen atoms of ester groups. The term "around" in this paragraph refers to a range of ± 0.10 ppm.

The fatty acid is not limited and may be an unsaturated fatty acid or a saturated fatty acid. Examples of the unsaturated fatty acid include monounsaturated fatty acids such as oleic acid and polyunsaturated fatty acids such as linoleic acid and linolenic acid. Examples of the saturated fatty acid include butyric acid and lauric acid.

Of these fatty acids, fatty acids with few double bonds, specifically saturated fatty acids or monounsaturated fatty acids are desirable, and oleic acid is preferred. Examples of usable plant oils containing such fatty acids include plant oils containing saturated fatty acids or monounsaturated fatty acids and plant oils modified by transesterification or the like. Plants may be improved by breed improvement, genetic modification, genome editing, or other techniques to produce plant oils containing such fatty acids.

Usable commercial oils may be available from Idemitsu Kosan Co., Ltd., Sankyo Yuka Kogyo K.K., ENEOS Corporation, Olisoy, H&R, Hokoku Corporation, Fuji Kosan Co., Ltd., Nisshin Oillio Group, and other manufacturers.

Examples of the liquid polymers include liquid diene-based polymers (liquid rubbers) and liquid farnesene polymers, all of that are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene-based polymers is preferably $1.0 \times 10^3$ to $5.0 \times 10^4$, more preferably $3.0 \times 10^3$ to $1.5 \times 10^4$ as measured by gel permeation chromatography (GPC) and calibrated with polystyrene standards. The lower limit of the Mw of the liquid diene-based polymers may be 4500 or 8500, and the upper limit may be 4500 or 8500.

Herein, the Mw of the liquid diene-based polymers is measured by gel permeation chromatography (GPC) and calibrated with polystyrene standards.

Usable liquid diene-based polymers may be commercially available from Sartomer, Kraray, and other manufacturers.

The resins may be resins that are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Of these, aromatic vinyl polymers, petroleum resins, terpene resins, and hydrogenated products of these polymers and resins are desirable.

The softening point of the resins that are solid at room temperature, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, particularly preferably 100°C or lower. When the softening point is within the range indicated above, the advantageous effects tend to be better achieved.

The softening point of the resins that are liquid at room temperature is preferably 20°C or lower, 10°C or lower, or 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of $\alpha$-methylstyrene and/or styrene. Specific examples include styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxyl groups and are produced by copolymerization of aromatic vinyl monomer components and acrylic monomer components. Solvent-free, carboxyl group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., and other manufacturers.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

[Chem. 17]

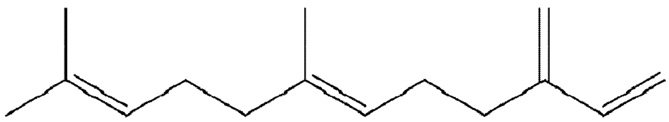

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 or more and 300000 or less may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effects tend to be better achieved.

Farnesene polymers that are either liquid or solid at room temperature (25°C) may be used. Of these, liquid farnesene polymers that are liquid at room temperature (25°C) are desirable.

The amount of the plasticizer (total amount of plasticizers) per 100 parts by mass of the rubber component in the tread rubber composition is preferably 1 part by mass or more, more preferably 5 parts by mass or more, still more preferably 10 parts by mass or more. The upper limit is preferably 50 parts by mass or less, more preferably 30 parts by mass or less, still more preferably 25 parts by mass or less. When the amount is within the range indicated above, the advantageous effects tend to be better achieved.

The amount of the plasticizer includes the amounts of oils and resins contained in oil-extended rubbers and resin-extended rubbers, respectively.

The amount within the range is also desirable in the cap tread rubber composition and the rubber composition for the second rubber layer.

The amount of solid plasticizers that are solid at room temperature (25°C) per 100 parts by mass of the rubber component in the tread rubber composition is preferably 20 parts by mass or less, more preferably 5 parts by mass or less, still more preferably 1 part by mass or less, and may be 0 parts by mass. When the amount is within the range indicated above, the advantageous effects tend to be better achieved.

The amount of the resins that are solid at room temperature (25°C) is desirably within the range indicated above.

The amount within the range is also desirable in the cap tread rubber composition and the rubber composition for the second rubber layer.

The amount of liquid plasticizers that are liquid at room temperature (25°C) per 100 parts by mass of the rubber component in the tread rubber composition is preferably 1 part by mass or more, more preferably 5 parts by mass or more, still more preferably 10 parts by mass or more. The upper limit is preferably 50 parts by mass or less, more preferably 30 parts by mass or less, still more preferably 25 parts by mass or less. When the amount is within the range indicated above, the advantageous effects tend to be better achieved.

The amount of the liquid plasticizers includes the amount of oils in oil-extended rubbers and the amount of liquid resins in resin-extended rubbers extended with liquid resins.

The amount of oils that are liquid at room temperature (25°C) is desirably within the range indicated above.

The amount within the range is also desirable in the cap tread rubber composition and the rubber composition for the second rubber layer.

In view of crack resistance, ozone resistance, or the like, the tread rubber composition preferably contains an antioxidant.

Non-limiting examples of the antioxidant include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3',5'-di-t-butyl-4'-hydroxyphenyl) propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, and other manufacturers.

The amount of the antioxidant per 100 parts by mass of the rubber component in the tread rubber composition is preferably 0.2 parts by mass or more, more preferably 2.0 parts by mass or more, still more preferably 3.4 parts by mass or more. The amount is preferably 10.0 parts by mass or less, more preferably 6.0 parts by mass or less.

The tread rubber composition preferably contains stearic acid.

The amount of the stearic acid per 100 parts by mass of the rubber component in the tread rubber composition is preferably 0.5 parts by mass or more, more preferably 1.5 parts by mass or more, still more preferably 2.0 parts by mass or more, while it is preferably 10 parts by mass or less, more preferably 5 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., and other manufacturers.

The tread rubber composition preferably contains zinc oxide.

The amount of the zinc oxide per 100 parts by mass of the rubber component in the tread rubber composition is preferably 0.5 parts by mass or more, more preferably 1.5 parts by mass or more, still more preferably 2.0 parts by mass or more, while it is preferably 6.0 parts by mass or less, more preferably 4.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., and other manufacturers.

The tread rubber composition may contain wax.

The amount of the wax per 100 parts by mass of the rubber component in the tread rubber composition is preferably 0.5 parts by mass or more, more preferably 1.6 parts by mass or more, while it is preferably 8.0 parts by mass or less, more preferably 5.0 parts by mass or less.

The wax is not limited. Any wax usually used in the tire industry may be suitably used. Examples include petroleum wax, mineral wax, synthetic wax, and plant-derived wax. Of these, petroleum wax and plant-derived wax are preferred, and petroleum wax is more preferred. Examples of the plant-derived wax include rice wax, carnauba wax, and candelilla wax. Examples of the petroleum wax include paraffin wax and microcrystalline wax as well as selected special

wax thereof. Paraffin wax is preferred. According to the present embodiments, wax does not include stearic acid. Usable commercial products of wax are available from Ouchi Shinko Chemical Industrial Co., Ltd., Nippon Seiro Co., Ltd., Paramelt, and other manufacturers. Each wax may be used alone, or two or more of these may be used in combination.

The tread rubber composition preferably contains sulfur as a crosslinking agent in order to moderately crosslink the polymer chains to obtain good properties.

The amount of the sulfur per 100 parts by mass of the rubber component in the tread rubber composition is 1.0 parts by mass or more, preferably 1.3 parts by mass or more, more preferably 1.5 parts by mass or more. The amount is preferably 7.0 parts by mass or less, more preferably 5.0 parts by mass or less, still more preferably 4.0 parts by mass or less.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd, and other manufacturers. Each of these may be used alone, or two or more of these may be used in combination.

The tread rubber composition preferably contains a vulcanization accelerator.

The amount of the vulcanization accelerator in the tread rubber composition is not limited and may be freely determined according to the desired curing rate and crosslink density. Still, the amount per 100 parts by mass of the rubber component is preferably 0.5 parts by mass or more, more preferably 2.5 parts by mass or more, still more preferably 4.0 parts by mass or more. The upper limit is preferably 8.0 parts by mass or less, more preferably 6.0 parts by mass or less, still more preferably 5.0 parts by mass or less.

Any type of vulcanization accelerators may be used, including those generally used. Examples of the vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. Of these, sulfenamide vulcanization accelerators, guanidine vulcanization accelerators, and benzothiazole vulcanization accelerators are preferred.

In addition to the above-described components, the tread rubber composition may appropriately contain agents commonly used in the tire industry such as releasing agents or other materials.

Herein, various materials containing carbon atoms (for example, rubbers, oils, resins, vulcanization accelerators, antioxidants, surfactants, or other materials) may be derived from carbon dioxide in the air. Such materials may be obtained from carbon dioxide by directly converting carbon dioxide or by synthesizing methane from carbon dioxide through methanation and then converting the methane.

A crosslinked tread rubber composition that contains the crosslinked rubber in which the rubber component is crosslinked through boron-oxygen bonds can be produced by crosslinking an uncrosslinked tread rubber composition (uncrosslinked rubber) containing the above-described components. Specifically, for example, a crosslinked tread rubber composition that contains the crosslinked rubber can be obtained by kneading the components with a rubber kneading machine such as an open roll mill or a Bambury mixer and then crosslinking or vulcanizing the kneaded product.

The kneading conditions are as follows. In a base kneading step of kneading additives other than the boron-oxygen-containing compound, sulfur, and vulcanization accelerators, the kneading temperature is preferably 100°C or higher, more preferably 120°C or higher, while it is preferably 180°C or lower, more preferably 170°C. In a final kneading step of kneading the boron-oxygen-containing compound, sulfur, and vulcanization accelerators, the kneading temperature is preferably 80°C or higher, while it is preferably 120°C or lower, more preferably 110°C or lower. The composition obtained after kneading the boron-oxygen-containing compound, sulfur, and vulcanization accelerators is usually subjected to crosslinking treatment or vulcanization treatment such as press vulcanization. The crosslinking or vulcanization temperature is preferably 140°C or higher, more preferably 150°C or higher, while it is preferably 190°C or lower, more preferably 185°C or lower.

The tread rubber composition is for use in the tread among tire components. In particular, it is suitably used in the cap tread or the second rubber layer.

The tread contains the crosslinked tread rubber composition.

The boron content Bc (% by mass) of the crosslinked tread rubber composition (100% by mass) is preferably 0.050% by mass or higher, more preferably 0.089% by mass or higher, still more preferably 0.100% by mass or higher, particularly preferably 0.174% by mass or higher, while it is preferably 0.350% by mass or lower, more preferably 0.300% by mass or lower, still more preferably 0.250% by mass or lower, particularly preferably 0.200% by mass or lower. When the boron content is within the range indicated above, the advantageous effects tend to be suitably achieved.

The mechanism of the enhancement of the advantageous effects provided by the predetermined boron content

Bc or higher, in particular, 0.100% by mass, is not clear. Presumably, with such a boron content, the crosslinked rubber in which a rubber component is crosslinked through boron-oxygen bonds (-B-O-) is sufficiently formed, thereby imparting a water activity that reversibly switches de-crosslinking and crosslinking depending on the presence of water or alcohol. This improves wet grip performance and abrasion resistance. Thus, presumably, overall performance in terms of wet grip performance and abrasion resistance is significantly improved.

The tire is produced using the tread rubber composition by usual methods. Specifically, the composition containing necessary additives before crosslinking or vulcanization is extruded and processed into the shape of a tire component such as a tread and then molded on a tire building machine by usual methods. The resulting tire component is assembled with other tire components to produce an unvulcanized tire. Then, the unvulcanized tire is heated and pressurized in a vulcanizer, whereby a tire can be produced.

Non-limiting examples of the tire include pneumatic tires, solid tires, and airless tires. Pneumatic tires are preferred among these.

The tire is suitably used as a passenger car tire, a large passenger car tire, a large SUV tire, a truck or bus tire, a motorcycle tire, a racing tire, a winter tire (studless tire, snow tire, studded tire), an all-season tire, a run-flat tire, an aircraft tire, a mining vehicle tire, or other tires.

The tire includes a tread containing the crosslinked tread rubber composition that is produced by crosslinking the uncrosslinked tread rubber composition.

The tread has a groove, and the boron content Bc (% by mass) of the crosslinked tread rubber composition (100% by mass) constituting the tread, the groove depth D (mm) of the tread, and the land ratio L (%) of the tread satisfy the following relationship (1):

$$(1)\ Bc/(D \times L) < 4.0 \times 10^{-4}.$$

The term "groove depth of the tread" in claims refers to a distance in the tire radial direction to the deepest part of a groove among grooves that extend in prescribed directions such that they section the surface of the tread to define various tread patterns in a vulcanized tire.

Herein, the groove depth D of the tread is the depth of a circumferential groove measured along the normal of a face that is extended from the ground contact face of the outermost surface of the tread. The groove depth D refers to a distance from the face extended from the ground contact face to the bottom of the deepest groove, specifically, the largest distance among the groove depths of existing circumferential grooves.

The term "land ratio" in claims refers to a total percentage (%) of actual ground contact areas relative to a total virtual ground contact face area in which all grooves and, if present, sipes are filled.

Herein, in the case where the tire is a pneumatic tire, the land ratio L can be calculated from a ground contact patch of the tire mounted on a normal rim under the conditions of a normal internal pressure and a normal load. In the case of a non-pneumatic tire, the land ratio L can be determined as described above without a normal internal pressure.

The ground contact patch may be obtained by mounting the tire on a normal rim, applying a normal internal pressure to the tire, and allowing the tire to stand at 25°C for 24 hours, followed by applying black ink to the tread surface and pressing the tread surface against a cardboard at a normal load (camber angle: 0°) to transfer the ink to the cardboard. The transfer may be performed at five positions of the tire by rotating the tire 72° each time in the circumferential direction. Namely, five ground contact patches are obtained. The discontinuous parts interrupted by grooves in the contour of each of the five ground contact patches are smoothly connected to draw a figure, and the area of the figure is defined as a virtual ground contact face.

The land ratio L is calculated using the expression:

(Average of areas of five ground contact patches transferred to cardboard (parts with black ink)/Average of areas of virtual ground contact faces determined from five ground contact patches) $\times$ 100 (%).

The value on the right side of the relationship (1) is preferably $3.8 \times 10^{-4}$, more preferably $3.6 \times 10^{-4}$, still more preferably $3.4 \times 10^{-4}$, further preferably $3.2 \times 10^{-4}$. The lower limit of the value of "$Bc/(D \times L)$" is not limited, and it is preferably $1.0 \times 10^{-4}$ or more, more preferably $1.7 \times 10^{-4}$ or more, still more preferably $1.9 \times 10^{-4}$ or more, further preferably $2.0 \times 10^{-4}$ or more. When the value is within the range indicated above, the advantageous effects tend to be better achieved.

In the tire, the groove depth D (mm) of a circumferential groove in the tread is preferably 5.0 mm or more, more preferably 6.0 mm or more, still more preferably 7.0 mm or more, further preferably 7.5 mm or more, particularly preferably 8.0 mm or more, while it is preferably 20.0 mm or less, more preferably 15.0 mm or less, still more preferably 10.0 mm or less, particularly preferably 9.0 mm or less. When the groove depth D is within the range indicated above, the advantageous effects tend to be better achieved.

The mechanism of the enhancement of the advantageous effects provided by the predetermined grove depth D or more, in particular, 7.5 mm or more, is not clear. Presumably, with such a predetermined grove depth or more, good abrasion resistance can be imparted while improving wet grip performance. Thus, presumably, overall performance in terms of wet grip performance and abrasion resistance is significantly improved.

In the tire, the land ratio (percentage of land portions in the total ground contact area) L (%) of the tread is preferably 60% or higher, more preferably 68% or higher, still more preferably 70% or higher, while it is preferably 95% or lower, more preferably 90% or lower, still more preferably 85% or lower. When the land ratio is within the range indicated above, the advantageous effects tend to be better achieved.

The mechanism of the enhancement of the advantageous effects provided by the predetermined land ratio L or higher, in particular, 70% or higher, is not clear. Presumably, with such a predetermined land ratio, good abrasion resistance can be imparted while improving wet grip performance. Thus, presumably, overall performance in terms of wet grip performance and abrasion resistance is significantly improved.

The tread has a groove, and the boron content Bc (% by mass) of the crosslinked tread rubber composition (100% by mass) constituting the tread and the groove depth D (mm) of the tread desirably satisfy the following relationship (2):

$$(2)\ Bc/D < 3.0 \times 10^{-2}.$$

The value on the right side of the relationship (2) is preferably $2.7 \times 10^{-2}$, more preferably $2.6 \times 10^{-2}$, still more preferably $2.5 \times 10^{-2}$, further preferably $2.3 \times 10^{-2}$. The lower limit of the value of "Bc/D" is not limited, and it is preferably $1.0 \times 10^{-2}$ or more, more preferably $1.2 \times 10^{-2}$ or more, still more preferably $1.3 \times 10^{-2}$ or more, further preferably $1.5 \times 10^{-2}$ or more. When the value is within the range indicated above, the advantageous effects tend to be better achieved.

The mechanism of the enhancement of the advantageous effects provided by the value of "Bc/D" lower than the predetermined value is not clear. Presumably, controlling the groove depth to be the predetermined value or more relative to the boron content of the tread imparts good abrasion resistance while improving wet grip performance. Thus, presumably, overall performance in terms of wet grip performance and abrasion resistance is significantly improved.

The tread has a groove, and the boron content Bc (% by mass) of the crosslinked tread rubber composition (100% by mass) constituting the tread and the land ratio L (%) of the tread desirably satisfy the following relationship (3):

$$(3)\ Bc/L < 3.0 \times 10^{-3}.$$

The value on the right side of the relationship (3) is preferably $2.8 \times 10^{-3}$, more preferably $2.7 \times 10^{-3}$, still more preferably $2.6 \times 10^{-3}$. The lower limit of the value of "Bc/L" is not limited, and it is preferably $1.0 \times 10^{-3}$ or more, more preferably $1.3 \times 10^{-3}$ or more, still more preferably $1.5 \times 10^{-3}$ or more. When the value is within the range indicated above, the advantageous effects tend to be better achieved.

The mechanism of the enhancement of the advantageous effects provided by the value of "Bc/L" lower than the predetermined value is not clear. Presumably, controlling the land ratio to be the predetermined value or higher relative to the boron content of the tread imparts good abrasion resistance while improving wet grip performance. Thus, presumably, overall performance in terms of wet grip performance and abrasion resistance is significantly improved.

The tire has a predetermined tread thickness T.

The term "tread" in claims refers to a part that is considered to come into contact with the road surface in a tire as a final product. The tread may be any of a monolayer tread, a two-layer tread, or a three or more-layer tread. The thickness T of the tread refers to the thickness of the entirety of a monolayer tread, a two-layer tread, or a three or more-layer tread.

Herein, the term "thickness T of the tread" refers to the thickness of the tread on the tire equator in a cross-section along the tire radial direction. The thickness T means a straight line distance from the tread surface to the inner face of the tread in the tire radial direction in a cross-section along the tire radial direction. For example, the thickness T of a monolayer tread refers to a straight line distance from the surface of the monolayer tread itself (first rubber layer) to the inner face of the tread in the tire radial direction. The thickness T of a two-layer tread including a cap tread as the outermost layer (first rubber layer) and a base tread (second rubber layer) adjacent to the inner face of the cap tread in the tire radial direction refers to a straight line distance from the surface of the cap tread to the inner face of the base tread in the tire radial direction. The thickness T of a three or more-layer tread including a cap tread as the outermost layer (first rubber layer), a second rubber layer adjacent to the inner side of the cap tread in the tire radial direction, and another rubber layer disposed on the inner side of the second rubber layer in the tire radial direction refers to a straight line distance from the surface of the cap tread to the inner face in the tire radial direction of another rubber layer present on the innermost side in the tire radial direction.

The thickness T of the tread on the tire equator refers to a distance from the outermost surface of the tread on the tire equator measured along the tire equator.

In the case where a conducting member or the like is present on the tire equator, the thickness is measured along the tire equator from a straight line connecting the edges of the interface interrupted by the conducting member.

In the case where a groove is present on the tire equator, the thickness is measured at a central portion of a land portion nearest to the tire equator in the tire width direction. The thickness is measured along the normal of the outer surface of the tread in the tire radial direction.

The thickness T of the cap tread among treads refers to the thickness of the cap tread on the tire equator in a cross-section along the tire radial direction. The thickness is a straight line distance from the tread surface (surface of the cap tread) to the inner face of the cap tread in the tire radial direction in a cross-section along the tire radial direction.

The thickness T of the second rubber layer adjacent to the inner side of the cap tread in the tire radial direction refers to the thickness of the second rubber layer on the tire equator in a cross-section along the tire radial direction. The thickness is a straight line distance from the outer surface of the second rubber layer in the tire radial direction to the inner face of the second rubber layer in the tire radial direction in a cross-section along the tire radial direction.

Herein, the dimensions such as thickness are measured while the width between the bead portions of the tire is fixed to the normal rim width. In the measurement of each dimension, a sample is cut from the tire in the tire radial direction, and the width between the bead edges on both sides of the sample is fixed to the normal rim width.

Herein, the dimensions of the parts of the tire are measured for the tire in the normal state, unless otherwise stated.

Herein, the term "normal state" refers to a state where the tire is mounted on a normal rim (not shown), inflated to a normal internal pressure, and under no load.

If measurement of the tire mounted on a normal rim is impossible, the dimensions and angles of the parts of the tire in a meridional cross-section of the tire are measured in a cross-section of the tire cut along a plane including the axis of rotation, in which the distance between the right and left beads corresponds to the distance between the beads in the tire mounted on a normal rim.

The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, it will be followed. Moreover, for a tire which is not defined by any of the standards, it refers to a rim with the smallest diameter and, secondly, the narrowest width among the rims on which the tire can be mounted and can maintain the internal pressure, i.e., the rims that cause no air leakage between the rim and the tire.

The term "normal internal pressure" refers to an air pressure specified for each tire by the standard in a standard system including standards according to which the tire is provided, and may be "maximum air pressure" in JATMA, "inflation pressure" in ETRTO, or the maximum value shown in Table "TIRE LOAD LIMITS AT VARIOUS COLD INFLATION PRESSURES" in TRA. Like "normal rim", JATMA, ETRTO, and TRA will be referenced in that order, and the corresponding standard will be followed. Moreover, for a tire which is not defined by any of the standards, it refers to a normal internal pressure of 250 kPa or more for another tire size defined by any of the standards, for which the normal rim is listed as the standard rim. Here, when a plurality of normal internal pressures of 250 kPa or more are listed, it refers to the smallest one of these normal internal pressures.

Herein, the term "normal load" refers to a load specified for each tire by the standard in a standard system including standards according to which the tire is provided, and may be "maximum load capacity" in JATMA, "load capacity" in ETRTO, or the maximum value shown in Table "TIRE LOAD LIMITS AT VARIOUS COLD INFLATION PRESSURES" in TRA. Like "normal rim" and "normal internal pressure" described above, JATMA, ETRTO, and TRA will be referenced in that order, and the corresponding standard will be followed. Moreover, for a tire which is not defined by any of the standards, the normal load $W_L$ is calculated by the following equations.

$$V = \{(Dt/2)^2 - (Dt/2 - Ht)^2\} \times \pi \times Wt$$

$$W_L = 0.000011 \times V + 175$$

$W_L$: normal load (kg)
V: virtual volume ($mm^3$) of tire
Dt: outer diameter (mm) of tire
Ht: cross-sectional height (mm) of tire
Wt: cross-sectional width (mm) of tire

The term "cross-sectional width Wt (mm)" of the tire refers to the width of the tire in the normal state corresponding to the largest distance between the outer surfaces of the sidewalls, excluding patterns, letters, and the like on the sides of

the tire, if present.

The term "outer diameter Dt (mm)" of the tire refers to the outer diameter of the tire in the normal state.

The term "cross-sectional height Ht (mm)" of the tire refers to the height in the tire radial direction in a radial cross-section of the tire. Provided that the rim diameter of the tire is R (mm), the height corresponds to a half of the difference between the outer diameter Dt of the tire and the rim diameter R. In other words, the cross-sectional height Ht can be determined by (Dt - R)/2.

The thickness T (mm) of the tread in the tire is preferably 4.5 mm or more, more preferably 7.5 mm or more, still more preferably 8.3 mm or more, further preferably 8.5 mm or more, particularly preferably 9.0 mm or more, while it is preferably 20.0 mm or less, more preferably 15.0 mm or less, still more preferably 12.0 mm or less, particularly preferably 11.0 mm or less. When the thickness T is within the range indicated above, the advantageous effects tend to be suitably achieved.

The thickness (mm) of the cap tread in the tire is preferably 4.6 mm or more, more preferably 5.25 mm or more, still more preferably 6.0 mm or more, while it is preferably 14.0 mm or less, more preferably 10.5 mm or less, still more preferably 7.0 mm or less. When the thickness is within the range indicated above, the advantageous effects tend to be suitably achieved.

The thickness (mm) of the second rubber layer in the tire is preferably 2.0 mm or more, more preferably 2.3 mm or more, still more preferably 2.6 mm or more, while it is preferably 6.0 mm or less, more preferably 4.5 mm or less, still more preferably 3.0 mm or less. When the thickness is within the range indicated above, the advantageous effects tend to be suitably achieved.

An exemplary embodiment of the tire is described below with reference to drawings. The tire is not limited to the embodiment.

In FIG. 1, the vertical direction corresponds to the radial direction of a tire 2, the horizontal direction corresponds to the axial direction of the tire 2, and the direction perpendicular to the paper corresponds to the circumferential direction of the tire 2. The tire 2 is bilaterally symmetrical. A tread 4 is a monolayer tread.

Although FIG. 1 shows an example of the monolayer tread 4, the tread may be a two-layer tread including a cap tread and a base tread or a three or more-layer tread.

The tread 4 in the tire 2 in FIG. 1 contains the crosslinked tread rubber composition. The tread 4 contains the crosslinked rubber in which a rubber component is crosslinked through boron-oxygen bonds.

In the tire 2, each sidewall 6 extends radially substantially inwardly from an edge of the tread 4. The radially outer portion of the sidewall 6 is bonded to the tread 4. The radially inner portion of the sidewall 6 is bonded to a clinch 10. The sidewall 6 can prevent damage to a carcass 14.

In FIG. 1, each wing 8 is located between the tread 4 and the sidewall 6. The wing 8 is bonded to both the tread 4 and the sidewall 6.

Each clinch 10 is located radially substantially inwardly of the sidewall 6 and has at least one part to contact a rim.

The carcass 14 includes a carcass ply 36. Although the carcass 14 in the tire 2 includes one carcass ply 36, it may include two or more carcass plies.

In the tire 2, the carcass ply 36 extends between the bead cores 32 on opposite sides along the tread 4 and the sidewalls 6. The carcass ply 36 is folded around each bead core 32 from the inside to the outside in the axial direction. Due to the folding, the carcass ply 36 is provided with a main portion 36a and a pair of folded portions 36b. Namely, the carcass ply 36 includes the main portion 36a and a pair of the folded portions 36b.

Each bead core 32 includes a bead apex 34 radially outwardly extending from the bead core 32. The bead core 32 has a ring shape and desirably contains a wound non-stretchable wire. The bead apex 34 is radially outwardly tapered.

Though not shown, the carcass ply 36 desirably consists of a large number of parallel cords and a topping rubber. The absolute value of the angle of each cord with respect to the equator CL is suitably from 75° to 90°. In other words, the carcass 14 preferably has a radial structure.

In FIG. 1, a belt layer 16 is located radially inwardly of the tread 4. The belt layer 16 is stacked on the carcass 14. The belt layer 16 reinforces the carcass 14. In the tire 2 in FIG. 1, the belt layer 16 consists of an interior layer 38 and an exterior layer 40. As is clear from FIG. 1, the interior layer 38 is desirably slightly wider in the axial direction than the exterior layer 40. In the tire 2, the axial width of the belt layer 16 is preferably at least 0.6 times but preferably not more than 0.9 times the cross-sectional width of the tire 2.

The interior layer 38 and the exterior layer 40 each desirably include a parallel array of single-strand steel cords (steel monofilaments) and a topping rubber (coating rubber). In other words, the belt layer 16 contains a parallel array of steel monofilaments.

In FIG. 1, the band 18 is located radially outwardly of the belt layer 16. The band 18 has an axial width that is equal to that of the belt layer 16. The band 18 may have a larger width than the belt layer 16.

Though not shown, the band 18 desirably consists of a cord and a topping rubber. The cord is spirally wound. This band 18 has what is called a jointless structure. The cord extends substantially in the circumferential direction. The angle of the cord with respect to the circumferential direction is preferably 5° or smaller or even 2° or smaller. The cord restricts the

belt layer 16, thereby inhibiting lifting of the belt layer 16.

The belt layer 16 and the band 18 in FIG. 1 constitute a reinforcing layer. The reinforcing layer may consist only of the belt layer 16.

FIG. 2 is an enlarged view showing the tread 4 and its vicinity in FIG. 1.

The tire in FIG. 2 is a tire 2 having a groove 26 on the tire equator (on CL).

In this tire, the thickness (T) of the tread is measured at a central portion of a land portion nearest to the groove 26 on the tire equator in the tire width direction in a cross-section along the tire radial direction. The thickness is measured along the normal of the surface of the tread 4. Specifically, the thickness refers to a straight line distance from the outer surface of the tread 4 in the tire radial direction to an interface on the inner face of the tread 4 in the tire radial direction.

An innerliner 20 is located inwardly of the carcass 14. The innerliner 20 is bonded to the inner surface of the carcass 14. A typical substrate rubber of the innerliner 20 is butyl rubber or a halogenated butyl rubber. The innerliner 20 maintains the inner pressure of the tire 20.

Each chafer 22 is located near the bead 12. In this embodiment, the chafer 22 desirably consists of a rubber and a fabric impregnated with the rubber. The chafer 22 may be integrated with the clinch 10.

In the tire 2, the tread 4 has main grooves 42 as grooves 26. As shown in FIG. 1, the tread 4 has a plurality of, specifically three, main grooves 42 engraved thereon. The main grooves 42 are spaced apart in the axis direction. Four ribs 44 extending in the circumferential direction are defined by the three main grooves 42 engraved on the tread 4. In other words, each main groove 42 is between one rib 44 and another rib 44.

The main grooves 42 extend in the circumferential direction. The main grooves 42 are continuous in the circumferential direction without interruption. The main grooves 42 promote draining of water present between the road surface and the tire 2, for example, in rainy weather. Thus, the tire 2 can sufficiently contact the road surface even when the road surface is wet.

In FIG. 2, D represents the groove depth of the main circumferential groove 42 on the tread 4.

With regard to the tread 4, the boron content Bc (% by mass) of the tread 4, the groove depth D (mm) of the tread 4, and the land ratio L (%) of the tread 4 satisfy the relationship (1): "$Bc/(D \times L) < 4.0 \times 10^{-4}$".

In the tire 2, the boron content Bc (% by mass) of the tread 4, the groove depth D (mm) of the tread 4, the land ratio L (%) of the tread 4, and the thickness T (mm) of the tread 4 desirably give Bc/D, Bc/L, Bc, D, and L each within the range indicated above.

## EXAMPLES

Examples (working examples) which are considered preferable to implement the present invention are described below although the scope of the invention is not limited to the examples.

Chemicals used in tire production are listed below. If necessary, the chemicals are purified by usual techniques.

NR: TSR20
SBR: SBR1502 (E-SBR available from JSR Corporation, styrene content: 24% by mass, vinyl bond content: 17% by mass),
BR: polybutadiene rubber (BR150B available from UBE Corporation, cis content: 97% by mass)
Carbon black: SHOBLACK N220 ($N_2SA$: 114 $m^2/g$) available from Cabot Japan K.K.
Silica: ULTRASIL VN3 (average particle size: 19 nm, $N_2SA$: 175 $m^2/g$) available from Evonik Degussa
Boron-oxygen-containing compound 1: a compound ([Chem. 8]) produced in Production Example 1 described below
Oil: Diana Process NH-70S (aromatic process oil) available from Idemitsu Kosan Co., Ltd.
Silane coupling agent: Si266 (bis(3-triethoxysilylpropyl)disulfide) available from Evonik Degussa
Zinc oxide: zinc oxide #2 available from Mitsui Mining & Smelting Co., Ltd.
Stearic acid: stearic acid TSUBAKI available from NOF Corporation
Sulfur: powdered sulfur available from Tsurumi Chemical Industry Co., Ltd.
Vulcanization accelerator 1: NOCCELER CZ (CBS, N-cyclohexyl-2-benzothiazolylsulfenamide) available from Ouchi Shinko Chemical Industrial Co., Ltd.
Vulcanization accelerator 2: NOCCELER D (DPG, 1,3-diphenylguanidine) available from Ouchi Shinko Chemical Industrial Co., Ltd.

(Production Example 1)

4-(Mercaptomethyl)-1,2-benzenediol and [4-(sulfanylmethyl)phenyl]boronic acid are reacted in toluene at 50°C to obtain a boron-oxygen-containing compound 1 represented by [Chem. 8].

<Production of test tire>

According to the formulation in Table 1, materials other than the boron-oxygen-containing compound, the sulfur, and the vulcanization accelerators are kneaded in a 1.7 L Banbury mixer (Kobe Steel, Ltd.) at 150°C for five minutes to obtain a kneaded product.

The boron-oxygen-containing compound, the sulfur, and the vulcanization accelerators are added to the kneaded product, and they are kneaded using an open roll mill at 80°C for five minutes to obtain an uncrosslinked rubber composition.

The uncrosslinked rubber composition is formed into the shape of a monolayer tread and is then assembled with other tire components on a tire building machine to build an unvulcanized tire. The unvulcanized tire is vulcanized at 170°C for 10 minutes, whereby a test tire (size 205/55R16, a passenger car tire) is produced.

Test tires containing the compositions prepared according to the formulation and the specification varied as shown in Table 1 are simulated. Table 1 shows the results calculated as described in the evaluation methods below.

The reference comparative example is as follows.

Table 1: Comparative Example 2

<Wet grip performance>

A real vehicle is subjected to circular driving on a wet surface of a circular track under the following conditions.

(Conditions)

Number of laps: 30

Speed of circular driving: maximum speed without slipping (critical circular driving speed)

The critical circular driving speed during the circular driving is subjectively evaluated with the following criteria, for example. Specifically, the wet grip performance is evaluated as bad when the critical circular driving speed almost does not change in the 1st to 30th laps, while the wet grip performance is evaluated as good when the critical circular driving speed almost does not change in the 1st to 5th laps (initial stage) and then gradually increases after the 5th lap. The evaluation result is indicated as an index relative to the evaluation result in the reference comparative example taken as 100.

In the case where the critical circular driving speed almost does not change in the 1st to 5th laps (initial stage) and then gradually increases after the 5th lap, the gradual increase of the critical circular driving speed after the 5th lap is considered to be due to a decrease in the rubber elasticity along with de-crosslinking of the structure of [Chem. 14] to the structures of [Chem. 15] and [Chem. 16] (improvement of wet grip performance).

<Abrasion resistance>

The test tire is mounted on every wheel of a front-engine, front-wheel-drive car made in Japan. After the car runs 8000 km, the groove depth in the tire tread portion is measured. A running distance that causes a 1 mm decrease in the tire groove depth is calculated and expressed as an index using the expression below. A higher index indicates better abrasion resistance.

Abrasion resistance index = (Running distance that causes 1 mm decrease in groove depth of each test tire)/(Running distance that causes 1 mm decrease in groove depth of tire in Reference Comparative Example) × 100

<Overall performance>

Overall performance in terms of wet grip performance and abrasion resistance is evaluated based on a sum of the two indices obtained in the wet grip performance evaluation and the abrasion resistance evaluation. A higher sum indicates better overall performance.

[Table 1]

| | | Comparative Example | | | Example | | | | |
|---|---|---|---|---|---|---|---|---|---|
| | | 1 | 2 | 3 | 1 | 2 | 3 | 4 | 5 |
| Formulation (parts by mass) | NR | 30 | 30 | 30 | 30 | 30 | 30 | 30 | 30 |
| | SBR | 50 | 50 | 50 | 50 | 50 | 50 | 50 | 50 |
| | BR | 20 | 20 | 20 | 20 | 20 | 20 | 20 | 20 |
| | Carbon black | 15 | 15 | 15 | 15 | 15 | 15 | 15 | 15 |
| | Silica | 70 | 70 | 70 | 70 | 70 | 70 | 70 | 70 |
| | Boron-oxygen-containing compound 1 | | | 20 | 5 | 10 | 5 | 10 | 5 |
| | Oil | 10 | 10 | 10 | 10 | 10 | 10 | 10 | 10 |
| | Silane coupling agent: | 5 | 5 | 5 | 5 | 5 | 5 | 5 | 5 |
| | Zinc oxide | 2 | 2 | 2 | 2 | 2 | 2 | 2 | 2 |
| | Stearic acid | 2 | 2 | 2 | 2 | 2 | 2 | 2 | 2 |
| | Sulfur | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 |
| | Vulcanization accelerator 2 | 2 | 2 | 2 | 2 | 2 | 2 | 2 | 2 |
| Boron content Bc [% by mass] | | 0.000 | 0.000 | 0.333 | 0.089 | 0.174 | 0.089 | 0.174 | 0.089 |
| Groove depth D [mm] | | 7.0 | 7.5 | 7.0 | 7.0 | 7.0 | 7.5 | 8.0 | 7.0 |
| Land ratio L [%] | | 68 | 70 | 68 | 68 | 68 | 70 | 70 | 68 |
| Bc/(D × L) | | 0.0 | 0.0 | $7.0 \times 10^{-4}$ | $1.9 \times 10^{-4}$ | $3.7 \times 10^{-4}$ | $1.7\times10^{-4}$ | $3.1 \times 10^{-4}$ | $1.9 \times 10^{-4}$ |
| Bc/D | | 0.0 | 0.0 | $4.8 \times 10^{-2}$ | $1.3 \times 10^{-2}$ | $2.5 \times 10^{-2}$ | $1.2\times10^{-2}$ | $2.2 \times 10^{-2}$ | $1.3 \times 10^{-2}$ |
| Bc/L | | 0.0 | 0.0 | $4.9 \times 10^{-3}$ | $1.3 \times 10^{-3}$ | $2.6 \times 10^{-3}$ | $1.3\times10^{-3}$ | $2.5 \times 10^{-3}$ | $1.3 \times 10^{-3}$ |
| Tread thickness T [mm] | | 8.5 | 9.0 | 8.5 | 8.5 | 8.5 | 9.0 | 9.5 | 8.3 |
| Evaluation | Wet grip performance | 95 | 100 | 105 | 105 | 114 | 110 | 119 | 105 |
| | Abrasion resistance | 95 | 100 | 90 | 98 | 97 | 102 | 103 | 97 |
| | Overall performance | 190 | 200 | 195 | 203 | 211 | 212 | 222 | 202 |

REFERENCE SIGNS LIST

2 tire
4 tread
6 sidewall
8 wing
10 clinch
12 bead
14 carcass
16 belt layer
18 band
20 innerliner
22 chafer
24 tread surface
26 groove
32 bead core
34 bead apex
36 carcass ply
36a main portion
36b folded portion
38 interior layer
40 exterior layer
42 main groove
44 rib
CL tire equator
T thickness of tread
D main groove depth of main circumferential groove on tread

## Claims

**1.** A tire comprising a tread with a groove,

the tread containing a crosslinked rubber in which a rubber component is crosslinked through boron-oxygen bonds,
the tread having a boron content Bc (% by mass), a groove depth D (mm), and a land ratio L (%) that satisfy the following relationship (1):

$$(1)\ Bc/(D \times L) < 4.0 \times 10^{-4},$$

preferably the following relationship:

$$Bc/(D \times L) < 3.6 \times 10^{-4},$$

more preferably the following relationship:

$$Bc/(D \times L) < 3.2 \times 10^{-4},$$

preferably the following relationship:

$$Bc/(D \times L) \geq 1.7 \times 10^{-4}.$$

**2.** The tire according to claim 1,

wherein the boron content Bc (% by mass) of the tread and the groove depth D (mm) of the tread satisfy the

following relationship (2):

$$(2)\ Bc/D < 3.0 \times 10^{-2},$$

preferably the following relationship:

$$Bc/D < 2.3 \times 10^{-2}.$$

**3.** The tire according to claim 1 or 2,

wherein the boron content Bc (% by mass) of the tread and the land ratio L (%) of the tread satisfy the following relationship (3):

$$(3)\ Bc/L < 3.0 \times 10^{-3},$$

preferably the following relationship:

$$Bc/L < 2.6 \times 10^{-3}.$$

**4.** The tire according to any one of claims 1 to 3,

wherein the boron content Bc (% by mass) of the tread and the groove depth D (mm) of the tread satisfy the following relationship:

$$Bc/D \geq 1.0 \times 10^{-2},$$

wherein the boron content Bc (% by mass) of the tread and the land ratio L (%) of the tread satisfy the following relationship:

$$Bc/L \geq 1.0 \times 10^{-3}.$$

**5.** The tire according to any one of claims 1 to 4,
wherein the boron content Bc (% by mass) of the tread is 0.100% by mass or higher.

**6.** The tire according to any one of claims 1 to 5,
wherein the groove depth D (mm) of the tread is 7.5 mm or more.

**7.** The tire according to any one of claims 1 to 6,
wherein the land ratio L (%) of the tread is 70% or higher.

**8.** The tire according to any one of claims 1 to 7,
wherein the tread has a thickness T (mm) of 8.5 mm or more.

**9.** The tire according to any one of claims 1 to 8, comprising an isoprene-based rubber.

**10.** The tire according to any one of claims 1 to 9, comprising styrene-butadiene rubber.

**11.** The tire according to claim 10,
wherein the styrene-butadiene rubber has a styrene content of 25% by mass or lower.

**12.** The tire according to claim 10 or 11,
wherein the styrene-butadiene rubber has a vinyl bond content of 20% by mass or lower.

**13.** The tire according to any one of claims 1 to 12, comprising silica.

**14.** The tire according to claim 13,

wherein the tire comprises the silica in an amount of 60 parts by mass or more per 100 parts by mass of the rubber component.

**15.** The tire according to claim 13 or 14, wherein the silica has an average particle size of less than 20 nm.

FIG.1

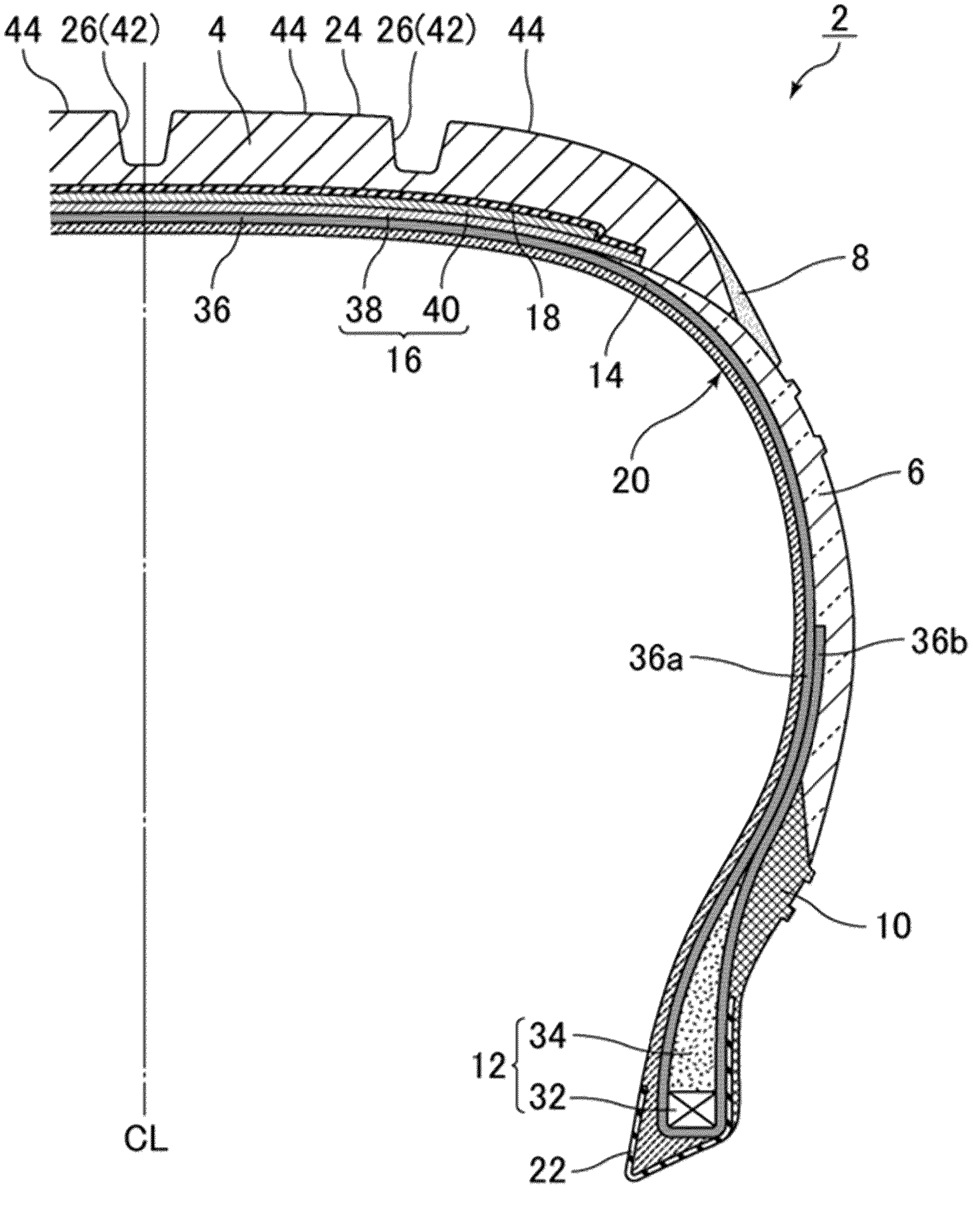
44
26(42)
4
44
24
26(42)
44
2
8
36
38
40
18
16
14
20
6
36a
36b
10
12
34
32
22
CL

FIG.2

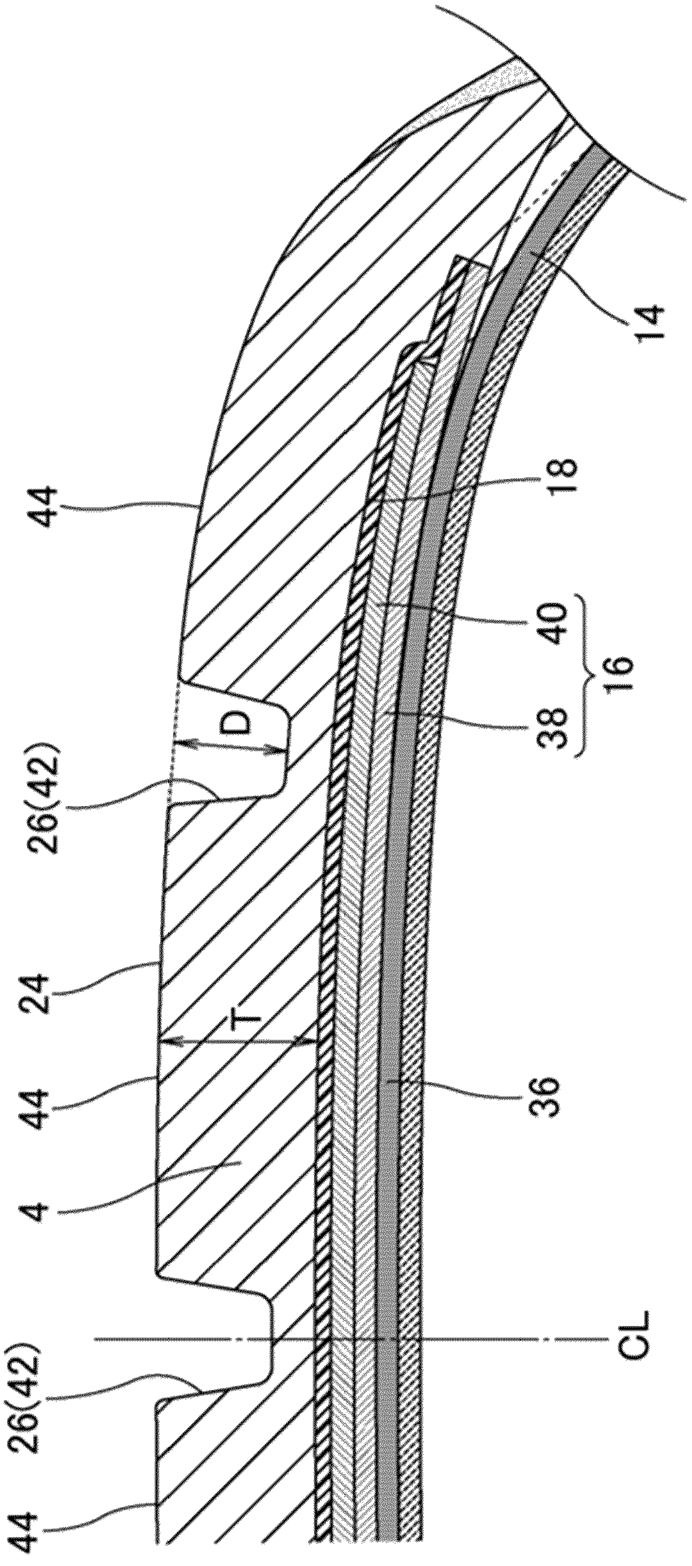

Europäisches Patentamt
European Patent Office
Office européen des brevets

# EUROPEAN SEARCH REPORT

Application Number
EP 25 18 3179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/023252 A1 (IZUMO SUGURU [JP]) 26 January 2023 (2023-01-26) * claims; examples; table 1 * ----- | 1-15 | INV. B60C1/00 C08L9/06 |
| A | EP 4 000 955 A1 (SUMITOMO RUBBER IND [JP]) 25 May 2022 (2022-05-25) * paragraphs [0142] - [0148]; claims; examples 1-3,5-11; tables 2-3 * ----- | 1-15 | |
| A | EP 4 382 552 A1 (BRIDGESTONE CORP [JP]) 12 June 2024 (2024-06-12) * paragraph [0001]; claims; examples; tables 1-3 * ----- | 1-15 | |
| A | US 2015/111985 A1 (TANABE YUSUKE [JP]) 23 April 2015 (2015-04-23) * paragraphs [0159] - [0165]; claims; examples 7-12; table 1 * ----- | 1-15 | |
| | | | TECHNICAL FIELDS SEARCHED (IPC) |
| | | | B60C C08L |

The present search report has been drawn up for all claims

1

| Place of search | Date of completion of the search | Examiner |
|---|---|---|
| Munich | 11 November 2025 | Reisbeck, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 18 3179

This annex lists the patent family members relating to the patent documents cited in the above-mentioned European search report. The members are as contained in the European Patent Office EDP file on
The European Patent Office is in no way liable for these particulars which are merely given for the purpose of information.

11-11-2025

| Patent document cited in search report | Publication date | Patent family member(s) | Publication date |
|---|---|---|---|
| US 2023023252 A1 | 26-01-2023 | EP 4119358 A1 | 18-01-2023 |
| | | US 2023023252 A1 | 26-01-2023 |
| EP 4000955 A1 | 25-05-2022 | CN 114537049 A | 27-05-2022 |
| | | EP 4000955 A1 | 25-05-2022 |
| | | JP 7665958 B2 | 22-04-2025 |
| | | JP 2022081097 A | 31-05-2022 |
| EP 4382552 A1 | 12-06-2024 | CN 117751156 A | 22-03-2024 |
| | | EP 4382552 A1 | 12-06-2024 |
| | | JP 2023023660 A | 16-02-2023 |
| | | US 2024327547 A1 | 03-10-2024 |
| | | WO 2023013333 A1 | 09-02-2023 |
| US 2015111985 A1 | 23-04-2015 | CN 104220508 A | 17-12-2014 |
| | | DE 112013001702 T5 | 11-12-2014 |
| | | US 2015111985 A1 | 23-04-2015 |
| | | US 2015337117 A1 | 26-11-2015 |
| | | WO 2013141240 A1 | 26-09-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015147543 A
- JP 2009002594 A


### Non-patent literature cited in the description


- *Akita Prefectural University Web Journal B/2019*, vol. 6, 216-222